# EUROPÄISCHE PATENTSCHRIFT

(11) **EP 0 925 201 B1**
(45) Veröffentlichungstag und Bekanntmachung des Hinweises auf die Patenterteilung: **22.03.2000**
(21) Anmeldenummer: 97909242.6
(22) Anmeldetag: 10.09.1997
(51) Int. Cl.: B60K 7/00, B60T 13/22

(54) **HYDROSTATISCH-MECHANISCHER RADANTRIEB**
HYDROSTATIC MECHANICAL WHEEL DRIVE
DISPOSITIF D'ENTRAINEMENT DE ROUE HYDROSTATIQUE ET MECANIQUE

(30) Priorität: 14.09.1996 DE 19637570
(43) Veröffentlichungstag der Anmeldung: 30.06.1999
(73) Patentinhaber: ZF FRIEDRICHSHAFEN AG, 88038 Friedrichshafen (DE)
(72) Erfinder: MANN, Egon, D-88045 Friedrichshafen (DE); GEBHARD, Wolfgang, D-88048 Friedrichshafen (DE)
(86) Internationale Anmeldenummer: EP9704942
(87) Internationale Veröffentlichungsnummer: WO9810951

(56) Entgegenhaltungen:
- WO-A-94/18451
- DE-A- 2 744 977
- DE-B- 2 739 994
- US-A- 4 114 737

## Beschreibung

Die Erfindung betrifft einen hydrostatisch-mechanischen Radantrieb mit den Merkmalen nach dem Oberbegriff von Anspruch 1.

Hydrostatisch-mechanische Radantriebe werden in fahrbaren Baumaschinen und in Fahrzeugen für Sonderaufgaben, z. B. Müllabfuhr, Schwertransport, Feuerwehr usw., eingesetzt, und zwar sowohl für Rad- als auch für Raupenfahrzeuge. Sie treiben einzelne Räder bzw. Kettenräder zum Antrieb der Raupe an. Die Räder sind an einem Flansch einer Radnabe angeschraubt.

Der für den einzelnen Radantrieb zur Verfügung stehende radiale Bauraum wird in der Regel von dem inneren Raddurchmesser bzw. einem Lochkreisdurchmesser für Befestigungsschrauben begrenzt. Die Raddurchmesser und Lochkreisdurchmesser lassen sich nicht beliebig vergrößern, da sonst die Räder nicht mehr in das Fahrzeugkonzept passen und der Aufwand für weitere Bauteile steigen würde, z. B. für die Raupen, Träger usw., oder bei gelenkten Rädern der Einschlagwinkel stark eingeschränkt würde. Innerhalb dieser radialen Begrenzung soll der Radantrieb mit seinem mechanischen Untersetzungsgetriebe in Form eines Planetengetriebes, mit einer Radlagerung, einem hydraulischen Hubkolbenmotor, einem Deckel für einen hydraulischen Anschluß und mit einer Bremse mit kurzer axialer Länge und geringem Gewicht untergebracht werden.

Die DE-A1 27 44 977 zeigt einen Radantrieb mit einem Axialkolbenmotor nach dem Schiefscheibenprinzip, der ein konstantes Schluckvolumen hat. Ein hochuntersetzendes Zahnradgetriebe in Form eines zweistufigen Planetengetriebes ermöglicht geringe radiale Abmessungen und eine hochbelastbare Lagerung durch Kegelrollenlager. Diese sind zwischen der Radnabe und einem Radnabenträger angeordnet, in dem der Hydromotor untergebracht und mit dem der Planetenträger starr verbunden ist. Allerdings ist die Baulänge erheblich.

Um den Geschwindigkeitsbereich des Fahrzeugs für Straßenfahrten zu erweitern, haben die Radantriebe eine Kupplung, durch die während der Straßenfahrt einzelne Radantriebe abgeschaltet werden können. Das reduzierte Gesamtschluckvolumen der verbleibenden Radantriebe bewirkt bei gleichbleibendem Fördervolumen der Pumpe eine deutlich erhöhte Fahrgeschwindigkeit, jedoch bei verringertem Drehmoment. Die Kupplung vergrößert außerdem das Gewicht, den Bauaufwand und die Baulänge des Radantriebs erheblich.

Als Antriebsaggregat kann jede Art eines Hydromotors, z. B. auch ein Radialkolbenmotor vorgesehen werden. Diese bauen zwar axial kurz, beanspruchen aber mehr radialen Bauraum. Ferner kann bei dem bekannten Radantrieb die Antriebswelle auf die Fahrzeuginnenseite durchgeführt werden, um auf dieser eine Bremse anzuordnen, was das Gewicht und die Baulänge noch weiter vergrößern würde.

Es ist ferner ein Radantrieb für Raupenfahrzeuge bekannt (Prospekt F 43421/RT 3391-383 f der Zahnradfabrik Passau GmbH aus dem Jahr 1991), bei dem ein Axialkolbenmotor nach dem Schiefscheibenprinzip in einem als Radnabenträger ausgebildeten Gehäuse angeordnet ist. Die Schiefscheibe ist in einem Schwenkrahmen schwenkbar gelagert und ihre Neigung zur Rotationsachse des Axialkolbenmotors kann über einen Hebelmechanismus und einen Hydraulikkolben verstellt werden, wodurch sich das Schluckvolumen und damit die Drehzahl des Axialkolbenmotors ändert. Grundsätzlich kann die Schiefscheibe stufenlos verstellt werden, für viele Anwendungsfälle reichen zwei Verstellstufen aus, nämlich für ein maximales und minimales Schluckvolumen. Dies ist sogar vorteilhaft, wenn zwischen zwei Geschwindigkeitsbereichen während der Arbeit schnell gewechselt werden muß.

Zwischen dem Gehäuse und dem Schwenkrahmen ist eine Feststellbremse in Lamellenbauweise mit automatischer Betätigung axial versetzt zum Axialkolbenmotor angeordnet, die durch eine Tellerfeder geschlossen und hydraulisch geöffnet wird. Die Bremse befindet sich somit zwischen dem Axialkolbenmotor und einem Zahnradgetriebe. Dadurch ist ihre Zugänglichkeit und Kühlung beeinträchtigt. Ferner ist der zur Verfügung stehende Bauraum so beengt, daß die Bremse schwere Fahrzeuge nicht mit ausreichender Sicherheit im Gefälle halten kann.

Der Erfindung liegt die Aufgabe zugrunde, einen kompakten hydrostatisch-mechanischen Radantrieb mit einer schnell ansprechenden Steuerung für den Radialkolbenmotor und die Bremse zu schaffen, die auch für schwere Fahrzeuge geeignet ist.

Sie wird gemäß der Erfindung durch die Merkmale des Anspruchs 1 gelöst.

Bei dem erfindungsgemäßen Radantrieb wird eine kurze axiale Baulänge dadurch erreicht, daß ein Radialkolbenmotor verwendet wird. Langsam laufende Radialkolbenmotoren mit einem hohen Drehmoment zeichnen sich durch eine große Laufruhe aus. Ferner sind die zur Steuerung erforderlichen Ventile platzsparend im Deckel für einen Hydraulikanschluß integriert. Dadurch erzielt man kurze Verbindungsleitungen zur Bremse und zum Radialkolbenmotor, wodurch das Ansprechverhalten verbessert ist.

Die Bremse öffnet automatisch, wenn der Druck in einer Bremsleitung einen vorgegebenen Wert, zweckmäßigerweise 10 at, übersteigt, und schließt durch die Federkraft, wenn der Druck unter diesen Wert fällt, und zwar in Abstimmung mit einem Bremsventil, das die Zusleitungen zum Radialkolbenmotor, sobald die Bremse geöffnet hat, und die Zuleitungen schließt, bevor die Bremse schließt. Damit die Bremse nicht überlastet werden kann, ist in der Bremsleitung ein Druckminderventil vorgesehen, das den maximalen Druck auf einen zulässigen Wert begrenzt, z. B. 20 at.

Es ist vorteilhaft, daß die Bremse schneller öffnet als schließt. Hierzu dient ein erstes Drosselrückschlagventil in der Bremsleitung, das in Druckrichtung öffnet. Dadurch wird die Bremse über die Rückschlagfunktion schnell beaufschlagt, während der Druck bei der Entlastung über die Drossel langsamer abfällt.

Die Bremse dient in der Regel als Feststellbremse. Sie kann als Lammellenbremse oder formschlüssige Bremse ausgebildet sein. Die formschlüssige Feststellbremse beansprucht nur einen kleinen Bauraum sowohl in axialer als auch in radialer Richtung, weil die Haltekräfte durch den Formschluß aufgebracht werden. Dies ist durch die Auswahl geeigneter Werkstoffe mit hoher Lebensdauer und Festigkeit in einem kleinen Bauraum selbst für schwere Fahrzeuge möglich. Die Feder zum Schließen der Bremse und die hydraulischen Einrichtungen, z. B. der Bremskolben, brauchen nur für die Ein- bzw. Ausrückkräfte ausgelegt zu werden und nicht für die größeren Haltekräfte.

Zweckmäßigerweise befinden sich die Teile der Bremse mit den Formschlußelementen in einem Druckraum, wobei das axial verschiebbare zweite Teil auf einem Bremskolben sitzt, der koaxial zu einer Rotationsachse des Radantriebs liegt. Der Bremskolben ist mit dem federbelasteten Ende dichtend aus dem Druckraum herausgeführt und verbindet unmittelbar oder über ein Zylindergehäuse des Radialkolbenmotors das zweite Teil formschlüssig mit der Sonnenradwelle. Der Bremskolben und die Feder können so dimensioniert werden, daß sie innerhalb des Steuerdeckels Platz finden.

Nach einem weiteren Vorschlag stützen sich die Federn über ein Lager zur Lagerung des Radialkolbenmotors am Radnabenträger ab. Dadurch können der Aufwand und der Bauraum für die Lagerung reduziert werden.

Zusätzlich zu der mechanisch wirkenden Bremse verfügt der Radantrieb über eine hydraulische Bremsfunktion, indem ein Bremsventil den Rücklauf vom Radialkolbenmotor sperrt, sobald der Druck unter den vorgegebenen Druck fällt, z. B. 10 at. Steigt der Druck in einer Versorungsleitung über diesen Wert, wird das Bremsventil über ein zweites Drosselrückschlagventil in eine Position verstellt, die den Rücklauf wieder freigibt und damit die Bremsfunktion ausschaltet. Druckbegrenzungsventile schützen die Versorgungsleitungen gegen Überdruck. Sie sind zweckmäßigerweise zwischen dem Bremsventil und dem Radialkolbenmotor geschaltet.

Um den Radmotor in mehreren Geschwindigkeitsbereichen mit unterschiedlichem Drehmoment betreiben zu können, ist ein Hubraumumschaltventil vorgesehen, das eine Zulaufleitung für einige Zylinder des Radialkolbenmotors unterbrechen und den motorseitigen Teil der Zulaufleitung mit einer Rücklaufleitung verbinden kann. Das dadurch bewirkte geringere Schluckvolumen des Radialkolbenmotors ergibt bei gleichbleibendem Fördervolumen der Hydraulikpumpe einen entsprechend höheren Drehzahlbereich bei verringertem Drehmoment.

In der Beschreibung und in den Ansprüchen sind zahlreiche Merkmale im Zusammenhang dargestellt und beschrieben. Der Fachmann wird die kombinierten Merkmale zweckmäßigerweise im Sinne der zu lösenden Aufgaben auch einzeln betrachten und zu sinnvollen weiteren Kombinationen zusammenfassen.

In der Zeichnung ist ein Ausführungsbeispiel der Erfindung dargestellt.
Es zeigt:

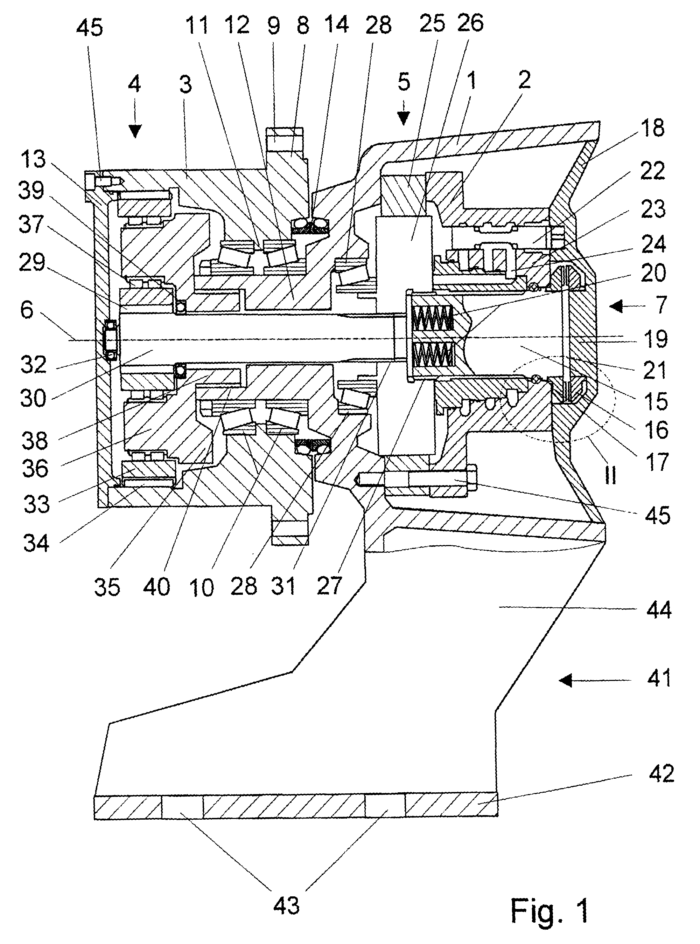

- Fig. 1: einen Querschnitt durch einen Radantrieb für Raupenfahrzeuge mit einer formschlüssigen Bremse;

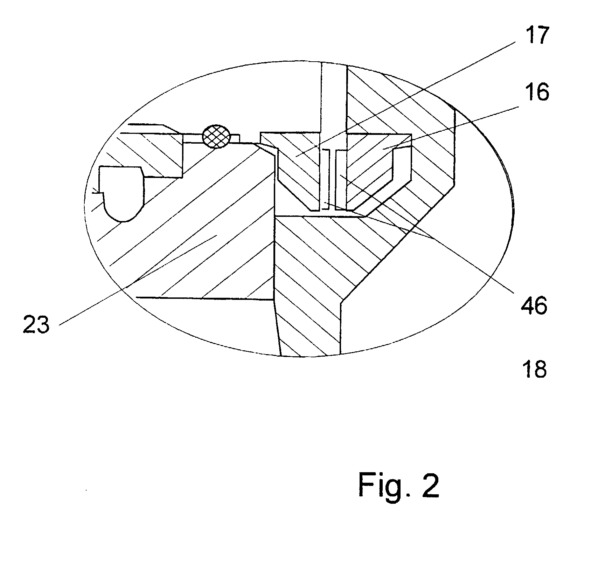

- Fig. 2: ein Detail II in Fig. 1 in einem vergrößerten Maßstab und

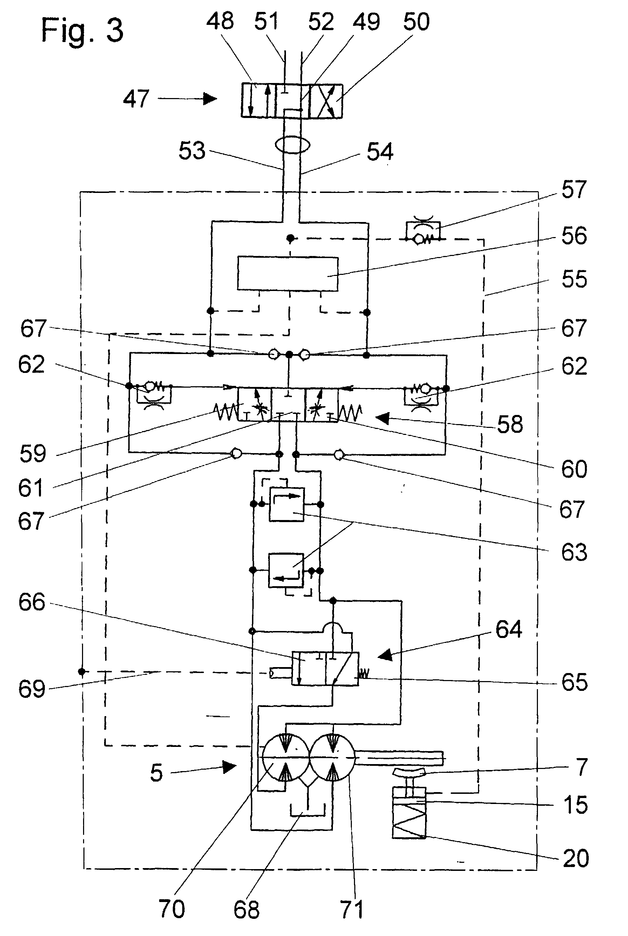

- Fig. 3: einen Hydraulikschaltplan.

Raupenfahrzeuge besitzen in der Regel an ihren Fahrzeuglängsseiten Raupen oder auch Ketten genannt, die über Laufrollen geführt sind und von Radantrieben über Kettenräder angetrieben werden. Die Laufrollen und die Radantriebe sind an einem Träger eines Fahrzeugrahmens gelagert bzw. befestigt.

Der Radantrieb besteht im wesentlichen aus einem Radnabenträger 1, der mit einem angeformten Getriebeanschlußteil 41 an dem Träger des Fahrzeugrahmens befestigt ist, einem hydrostatischen Hubkolbenmotor in Form eines Radialkolbenmotors 5 mit einem Deckel 2 für einen Hydraulikanschluß und Ventile zur Steuerung des Radialkolbenmotors 5 und einer Bremse 7; ferner aus einem Planetengetriebe 4 und einer Radnabe 3. Die Radnabe 3, die Bremse 7 und der Radialkolbenmotor 5 drehen um eine Rotationsachse 6.

Die Radnabe 3 hat einen Radflansch 8 mit Schraubenlöchern 9, um eine Radfelge oder ein Kettenrad zu befestigen, das in eine Kette oder Raupe eines Raupenfahrzeugs eingreift. Die Radnabe 3 ist mittels zweier eng beieinander liegender Radlager 10, die sich axial an einem Bund 11 abstützen, auf einem Lagerhals 12 des Radnabenträgers 1 gelagert. Eine Gleitringdichtung 14 dichtet den zwischen der Radnabe 3 und dem Radnabenträger 1 gebildeten Spalt ab. Da die Durchmesser der Radlager 10 relativ klein sind, kann der Spalt ebenfalls an einem kleinen Durchmesser abgedichtet werden, wodurch die Reibungsverluste und der Verschleiß der Gleitringdichtung 14 gering sind. Die gegenüberliegende Stirnseite der Radnabe 3 wird von einem Nabendeckel 13 verschlossen, der mit Schrauben 45 an der Radnabe 3 angeschraubt ist.

Der Radnabenträger 1 ist mit einem Getriebeanschlußteil 41 an dem Träger des Fahrzeugrahmens befestigt bzw. angeschraubt. Er bildet mit dem Getriebeanschlußteil 41 ein Teil, indem an seiner äußeren Umfangswandung ein oder mehrere Stege 44 angeformt sind, z. B. angeschmiedet, angegossen oder angeschweißt. Die Stege 44 enden in einem Flansch 42. Dieser verläuft achsparallel zur Rotationsachse 6 und überdeckt in axialer Richtung die Radnabe 3, den Radialkolbenmotor 5 und den Steuerdeckel 2 mit der Bremse 7 ganz oder teilweise. Er hat von der Rotationsachse 6 einen so großen radialen Abstand, daß das Kettenrad am Radflansch 8 frei drehen kann. Der Radantrieb und das Getriebeanschlußteil 41 werden zweckmäßigerweise in dem von der Kette bzw. Raupe umschlossenen Raum montiert. Hierfür sind Schraubenlöcher 43 vorgesehen. Bei einem Radfahrzeug ist der Radnabenträger 1 an einer Fahrzeugachse befestigt bzw. angelenkt.

Der Radialkolbenmotor 5, ein sogenannter Langsamläufer mit einer niedrigen Drehzahl und einem hohen Drehmoment, hat einen feststehenden Kurvenring 25, der zwischen dem Radnabenträger 1 und dem Deckel 2 mittels Schrauben 45 fest eingespannt ist. Der Deckel 2 umfaßt ein Ventilgehäuse 23 mit Steuerkanälen 24, die von Ventilkolben 22 gesteuert werden. Ein nicht dargestelltes Steuergerät, in der Regel ein Mikroprozessor, erzeugt Signale für die Steuerung. Der Radnabenträger 1 umgibt den Radialkolbenmotor 5 und den Deckel 2 glockenförmig. Ein Abschlußdeckel 18 verschließt die offene Seite des Radnabenträgers 1 und des Ventilgehäuses 23.

Am Kurvenring 25 ist ein rotierendes Zylindergehäuse 26 geführt, in dem sich, nicht sichtbar, Radialkolben in zuschaltbaren Zylindern 70 bzw. Zylindern 71 bewegen. Das Zylindergehäuse 26 ist mittels eines Lagers 28, eines Kegelrollenlagers, gegenüber dem Radnabenträger 1 axial und radial gelagert.

Werden die Radialkolben mit einem Druckmedium beaufschlagt, treibt das Zylindergehäuse 26 über eine Mitnahmeverzahnung 31 eine Sonnenradwelle 30 an, auf der ein Sonnenrad 29 drehfest sitzt, z. B. indem es an der Sonnenradwelle 30 spangebend oder spanlos angeformt ist. Das Sonnenrad 29 kämmt mit Planetenrädern 33. Diese sind mittels Planetenlager 37 in Form von Wälzlagern auf Planetenzapfen 36 eines Planetenträgers 35 gelagert. Die Planetenräder 33 kämmen mit einem Hohlrad 34, das mit der Radnabe 3 drehfest verbunden ist. Das Planetengetriebe 4 ist ein sogenanntes Standgetriebe, d. h. der Planetenträger 35 dreht sich nicht, sondern wird über eine formschlüssige Verbindung 40 an einem Ansatz 38 gehalten, der in den Lagerhals 12 des Radnabenträgers 1 eingreift.

Die Sonnenradwelle 30, die einerseits über das Zylindergehäuse 26 und das Lager 28 im Radnabenträger 1 gelagert ist, stützt sich am anderen Ende über ein Axiallager 32 an dem Nabendeckel 13 ab. Ein weiteres Wälzlager 39 führt das Sonnenrad 29 und die Sonnenradwelle 30 gegenüber dem Planetenträger 35.

Der Randantrieb hat eine formschlüssige Bremse 7 als Feststellbremse. So können auf kleinem Raum große Haltekräfte realisiert werden. Grundsätzlich sind aber auch Lammellenbremsen möglich. Ein erstes Teil 16 der Bremse 7 mit Formschlußelementen 46 ist drehfest auf einem Zapfen 19 des Deckels 18 befestigt. Ein zweites Teil 17 der Bremse 7 mit Formschlußelementen 46, das mit dem ersten Teil 16 zusammenwirkt, sitzt drehfest auf einem Bremskolben 15, der seinerseits das zweite Teil 17 direkt oder über das Zylindergehäuse 26 mit der Sonnenradwelle 30 verbindet. Eine oder mehrere Federn 20 belasten den Bremskolben 15 in Schließrichtung. Sie stützen sich über das Zylindergehäuse 26 axial am Lager 28 ab, das gleichzeitig zur Lagerung des Zylindergehäuses 26 dient. Die Bremse 7 ist in einem Druckraum 21 untergebracht, aus dem der Bremskolben 15 mit seinem federbelasteten Ende dichtend herausgeführt ist. Wird der Druckraum 21 mit Druck beaufschlagt, weicht der Bremskolben 15 entgegen der Kraft der Federn 20 zurück und die Bremse 7 öffnet.

Der Radantrieb besitzt zwei Versorgungsleitungen 53, 54, die je nach Drehrichtung des Radialkolbenmotors 5 über ein Fahrventil 47 mit Druck beaufschlagt werden. Das Fahrventil 47 hat entsprechend drei Schaltstellungen, eine Vorwärtsstellung 48 für die Vorwärtsfahrt, eine Neutralstellung und eine Rückwärtsstellung 50 für die Rückwärtsfahrt. Da die Steuerung für die Rückwärtsfahrt der Steuerung für die Vorwärtsfahrt entspricht, beschränken sich die Ausführungen auf die Beschreibung der Vorwärtsfahrt.

In der Neutralstellung 49 sind die Versorgungsleitungen 53 und 54 mit einem Rücklaufanschluß 52 verbunden, während ein Druckanschluß 51 abgesperrt ist. Das Hydrauliksystem des Radantriebs ist somit drucklos. Wird das Fahrventil 47 in die Vorwärtsstellung 48 verstellt, wird die Versorgungsleitung 53 mit Druck beaufschlagt und die Versorgungsleitung 54 mit dem Rücklaufanschluß 52 verbunden.

Von der Versorgungsleitung 53 zweigt eine Bremsleitung 55 ab, in der ein Druckminderventil 56 und ein erstes Drosselrückschlagventil angeordnet sind. Das Druckminderventil 56 begrenzt den Druck in der Bremsleitung 55, so daß die Bremse 7 nicht durch Überdruck beschädigt wird. Ferner sorgt das erste Drosselrückschlagventil 57 dafür, daß die Bremse schnell geöffnet wird, sobald ein vorgegebener Druck eine Vorspannung der Feder 20 überwindet, und langsam schließt, weil der Druck in der Bremsleitung 55 über die Drossel in dem ersten Drosselrückschlagventil 57 sich langsamer abbaut.

Mit einem Bremsventil 58 wird eine hydrostatische Bremsfunktion realisiert, indem in einer Bremsstellung 61 die Versorgungsleitung 54, die den Radialkolbenmotor mit dem Rücklaufanschluß 52 verbindet, unterbrochen ist und Rückschlagventile 67 den Rücklauf vom Zulauf entkoppeln. Dadurch arbeitet der Radialkolbenmotor 5 gegen einen Gegendruck, den die Druckbegrenzungsventile 63 begrenzen.

Die hydrostatische Bremswirkung wird so lange aufrechterhalten, bis der Druck in der Versorgungsleitung 53 den vorgegebenen Bremsdruck, z. B. 10 at, übersteigt und das Bremsventil 58 in die Vorwärtsstellung 59 verstellt. Dadurch wird der Rücklauf des Radialkolbenmotors 5 über die Versorgungsleitung 54 zum Rücklaufanschluß 52 hergestellt und die Bremsfunktion aufgehoben.

Von den Versorgungsleitungen 53 und 54 zweigen Leitungen zu einigen Zylindern 70 des Radialkolbenmotors ab, die von einem Hubraumumschaltventil 64 beherrscht werden. In einer Position für eine niedrige Stufe 65 sind die zuschaltbaren Zylinder 70 mit den übrigen Zylindern 71 parallel geschaltet, so daß der Radialkolbenmotor 5 das größte Schluckvolumen und den kleinsten Drehzahlbereich hat. Wird das Hubraumumschaltventil 64 über eine Steuerleitung 69 in eine Position für eine hohe Stufe 66 geschaltet, werden die zuschaltbaren Zylinder 70 mit zulauf- und rücklaufseitig mit dem Rücklaufanschluß 52 verbunden und der Zulauf von der Versorgungsleitung 53 unterbrochen. Die zuschaltbaren Zylinder 70 sind symbolisch als parallel geschalteter Motor gezeichnet. Das Hydraulikmedium fließt von dem Rücklaufanschluß 52 wieder zu der nicht dargestellten Hydraulikpumpe zurück. Leckagedruckmittel wird in einem Sumpf 68 gesammelt und ebenfalls zur Pumpe zurückgeführt.

### Bezugszeichen

- 1: Radnabenträger
- 2: Deckel
- 3: Radnabe
- 4: Planetengetriebe
- 5: Radialkolbenmotor
- 6: Rotationsachse
- 7: Bremse
- 8: Radflansch
- 9: Schraubenlöcher
- 10: Radlager
- 11: Bund
- 12: Lagerhals
- 13: Nabendeckel
- 14: Gleitringdichtung
- 15: Bremskolben
- 16: erstes Teil
- 17: zweites Teil
- 18: Deckel
- 19: Zapfen
- 20: Feder
- 21: Druckraum
- 22: Ventilkolben
- 23: Ventilgehäuse
- 24: Steuerkanäle
- 25: Kurvenring
- 26: Zylindergehäuse
- 27: formschlüssige Mitnahme
- 28: Lager
- 29: Sonnenrad
- 30: Sonnenradwelle
- 31: Mitnahmeverzahnung
- 32: Axiallager
- 33: Planetenrad
- 34: Hohlrad
- 35: Planetenträger
- 36: Planetenzapfen
- 37: Planetenlager
- 38: Ansatz
- 39: Wälzlager
- 40: formschlüssige
Verbindung
- 41: Getriebeanschlußteil
- 42: Flansch
- 43: Schraubenlöcher
- 44: Steg
- 45: Schraube
- 46: Formschlußelement
- 47: Fahrventil
- 48: Vorwärtsstellung
- 49: Neutralstellung
- 50: Rückwärtsstellung
- 51: Druckanschluß
- 52: Rücklaufanschluß
- 53: Versorgungsleitung vorwärts
- 54: Versorgungsleitung rückwärts
- 55: Bremsleitung
- 56: Druckminderventil
- 57: erstes Drossselrückschlagventil
- 58: Bremsventil
- 59: Vorwärtsstellung
- 60: Rückwärtsstellung
- 61: Bremsstellung
- 62: zweites Drosselrückschlagventil
- 63: Druckbegrenzungsventil
- 64: Hubraumumschaltventil
- 65: Position für eine niedrige Stufe
- 66: Position für eine hohe Stufe
- 67: Rückschlagventil
- 68: Sumpf
- 69: Leitung
- 70: zuschaltbare Zylinder
- 71: Zylinder

## Patentansprüche

1. Hydrostatisch-mechanischer Radantrieb mit einem hydrostatischen Radialkolbenmotor (5), der mit einem auf der Fahrzeugseite liegenden Deckel (2) verbunden ist und über eine Sonnenradwelle (30), ein Sonnenrad (29), Planetenräder (33), **einen feststehenden Planetenträger (35)** und ein Hohlrad (34) eines Planetengetriebes (4) eine Radnabe (3) antreibt und in einem Radnabenträger (1) angeordnet ist, auf dem die Radnabe (3) mit zwei Radlagern (10) gelagert ist, wobei mit der Sonnenradwelle (30) eine Bremse (7) verbunden ist, dadurch **gekennzeichnet**, daß eine Feder (20) über einen Bremskolben (15) die Bremse (7) schließt und der Bremskolben (15) zum Öffnen der Bremse (7) mit Druck entgegen der Federkraft beaufschlagt wird, und daß Ventile zum Steuern des Radialkolbenmotors (5) und der Bremse (7) in dem Deckel (2) integriert sind und eine Hydraulikpumpe den Radialkolbenmotor (5) und die Bremse (7) in einem offenen Kreislauf über ein Fahrventil versorgt.

2. Radantrieb nach Anspruch 1, dadurch **gekennzeichnet**, daß die Bremse (7) bei einem Druck unter einem vorgegebenen Wert schließt und bei einem Druck über diesem Wert öffnet in Abstimmung mit der Funktion eines Bremsventils (58).

3. Radantrieb nach Anspruch 1 oder 2, dadurch **gekennzeichnet**, daß in einer Bremsleitung (55) für die Bremse (7) ein Druckminderventil (56) vorgesehen ist, das den maximalen Druck für die Bremse (7) begrenzt.

4. Radantrieb nach Anspruch 3, dadurch **gekennzeichnet**, daß in der Bremsleitung (55) zwischen dem Bremskolben (15) und dem Druckminderventil (56) ein erstes Drosselrückschlagventil (57) angeordnet ist, das in Druckrichtung öffnet.

5. Radantrieb nach Anspruch 3 oder 4, dadurch **gekennzeichnet**, daß ein Bremsventil (58), das über ein zweites Drosselrückschlagventil (62) betätigt wird, den Rücklauf vom Radialkolbenmotor (5) öffnet, sobald der Versorgungsdruck über den vorgegebenen Wert steigt.

6. Radantrieb nach Anspruch 5, dadurch **gekennzeichnet**, daß das Bremsventil (58) den Rücklauf vom Radialkolbenmotor (5) bei einem Druck unter dem vorgegebenen Wert sperrt.

7. Radantrieb nach Anspruch 6, dadurch **gekennzeichnet**, daß zwischen dem Bremsventil (55) und dem Radialkolbenmotor (5) ein Druckbegrenzungsventil (63) geschaltet ist.

8. Radantrieb nach Anspruch 1, dadurch **gekennzeichnet**, daß eine Zulaufleitung für einige Zylinder (70) des Radialkolbenmotors (5) über ein Hubraumumschaltventil (64) unterbrochen und der motorseitige Teil mit einer Rücklaufleitung verbunden werden kann.

9. Radantrieb nach Anspruch 1, dadurch **gekennzeichnet**, daß die Bremse (7) zwei Teile (16, 17) hat, die über Formschlußelemente (46) zusammenwirken, wobei ein erstes Teil (16) mit dem Deckel (2) und ein zweites Teil (17) mit der Sonnenradwelle (30) drehfest verbunden sind.

10. Radantrieb nach Anspruch 9, dadurch **gekennzeichnet**, daß das zweite Teil (17) der Bremse (7) auf einem Bremskolben (15) sitzt, der koaxial zu einer Rotationsachse (6) des Radantriebs liegt und unmittelbar oder über das Zylindergehäuse (26) des Radialkolbenmotors (5) das zweite Teil (17) und die Sonnenradwelle (30) formschlüssig verbindet.

11. Radantrieb nach Anspruch 1, dadurch **gekennzeichnet**, daß die Feder (20) sich über ein Lager (28) zur Lagerung des Radialkolbenmotors (5) am Radnabenträger (1) abstützt.

12. Radantrieb nach Anspruch 1, dadurch **gekennzeichnet**, daß die Bremse (7) in einem nach außen abgedichteten Druckraum (21) untergebracht ist, aus dem der Bremskolben (15) mit seinem federbelasteten Ende herausragt, so daß die Bremse (7) öffnet, sobald der Druckraum (21) mit Druck beaufschlagt wird.

## Claims

1. Hydrostatic-mechanical wheel drive with a hydrostatic radial piston motor (5) connected to a cover (2) on the vehicle side, which via a sun gear shaft (30), a sun gear (29), planet gears (33), **a stationary planet carrier (35)** and a ring gear (34) of a planetary transmission (4) drives a wheel hub (3), and which is arranged in a wheel hub carrier (1) on which the wheel hub (3) is supported by two wheel bearings (10), with the sun gear shaft (30) being connected to a brake (7), **characterized** in that
a spring (20) via a brake piston (15) closes the brake (7) and the brake piston for opening of the brake (7) is pressure-actuated against the spring force;
and that valves for controlling the radial piston motor (5) and the brake (7) are integrated in the cover (2), and that a hydraulic pump feeds the radial piston motor (5) and the brake (7) within an open circuit via a drive valve.

2. Wheel drive according to Claim 1, **characterized**
in that the brake (7) at a pressure below a specified value closes and at a pressure above this value opens, in cooperation with the function of a brake valve (58).

3. Wheel drive according to Claim 1 or 2, **characterized**
in that in a brake line (55) for the brake (7) a pressure reduction valve (56) is arranged limiting maximum pressure for the brake (7).

4. Wheel drive according to Claim 3, **characterized**
in that in the brake line (55) between the brake piston (15) and the pressure reduction valve (56) a first throttle safety valve (57) is arranged, which opens in the direction of pressure.

5. Wheel drive according to Claim 3 or 4, **characterized**
in that a brake valve (58), which is activated via a second throttle safety valve (62), opens the return flow from the radial piston motor (5) as soon as the supply pressure rises above the specified value.

6. Wheel drive according to Claim 5, **characterized**
in that the brake valve (58) blocks the return flow from the radial piston motor (5) when the pressure drops below the specified value.

7. Wheel drive according to Claim 6, **characterized**
in that a pressure reduction valve (63) is arranged between the brake valve (55) and the radial piston motor (5).

8. Wheel drive according to Claim 1, **characterized**
in that a feed line for some cylinders (70) of the radial piston motor (5) can be interrupted via a displacement chamber change-over valve (64) and the part on themotor side can be connected to a return line.

9. Wheel drive according to Claim 1, **characterized**
in that the brake (7) has two parts (16, 17) cooperating via engaging elements (46), with a first part (16) being rotationally fixed to the cover (2) and a second part (17) being rotationally fixed to the sun gear shaft (30).

10. Wheel drive according to Claim 9, **characterized**
in that the second part (17) of the brake (7) is located on a brake piston (15), which is coaxially positioned in relation to a rotation axis (6) of the wheel drive and either directly or via the cylinder housing (26) of the radial piston motor (5) effects positive engagement of the second part (17) and the sun gear shaft (30).

11. Wheel drive according to Claim 1, **characterized**
in that the spring (20) is supported on the wheel hub carrier (1) via a bearing (28) for support of the radial piston motor (5).

12. Wheel drive according to Claim 1, **characterized**
in that the brake (7) is located in a sealed pressure chamber (21), from which the spring-loaded end of the brake piston (15) protrudes, so that the brake (7) opens as soon as the pressure chamber (21) is pressurized.

## Revendications

1. Dispositif d'entraînement de roue hydrostatique et mécanique avec un moteur hydraulique à pistons radiaux (5), relié à un capot (2) situé sur le côté du véhicule et qui entraîne un moyeu de roue (3) par l'intermédiaire d'un arbre de roue solaire (30), d'une roue solaire (29), de roues planétaires (33), d'un support planétaire fixe (35) et d'une couronne (34) d'un engrenage planétaire (4), et qui est disposé dans un support de moyeu de roue (1), sur lequel le moyeu de roue (3) est monté avec deux paliers de roue (10), dans lequel un frein (7) est relié à l'arbre de roue solaire, **caractérisé** en ce qu'un ressort (20) ferme le frein (7) par l'intermédiaire d'un piston de frein (15), en ce que le piston de frein (15) est soumis à pression pour ouvrir le frein (7) contre la force de ressort, en ce que des soupapes pour commander le moteur à pistons radiaux (5) et le frein (7) sont intégrées dans le capot (2), et en ce qu'une pompe hydraulique alimente le moteur à pistons radiaux (5) et le frein (7) dans un circuit ouvert par l'intermédiaire d'une soupape de marche.

2. Dispositif d'entraînement de roue selon la revendication 1, **caractérisé** en ce que le frein (7) se ferme en cas de pression inférieure à une valeur prédéterminée et s'ouvre en cas de pression supérieure à cette valeur en synchronisation avec la fonction d'une soupape de frein (58).

3. Dispositif d'entraînement de roue selon la revendication 1 ou 2, **caractérisé** en ce qu'une soupape réductrice de pression (56), qui limite la pression maximale pour le frein (7), est prévue dans une conduite du frein (55) pour le frein (7).

4. Dispositif d'entraînement de roue selon la revendication 3, **caractérisé** en ce qu'une première soupape d'étranglement de retenue (57), qui s'ouvre dans le sens de la pression, est disposée dans la conduite du frein (55), entre le piston de frein (15) et la soupape réductrice (56).

5. Dispositif d'entraînement de roue selon la revendication 3 ou 4, **caractérisé** en ce qu'une soupape de frein (58), qui est actionnée par l'intermédiaire d'une deuxième soupape d'étranglement de retenue (62), ouvre le retour du moteur à pistons radiaux (5) dès que la pression d'alimentation dépasse la valeur prédéterminée.

6. Dispositif d'entraînement de roue selon la revendication 5, **caractérisé** en ce que la soupape de frein (58) ferme le retour du moteur à pistons radiaux (5) en cas de pression inférieure à la valeur prédéterminée.

7. Dispositif d'entraînement de roue selon la revendication 6, **caractérisé** en ce qu'une soupape de limitation de pression (63) est montée en série entre la soupape de frein (55) et le moteur à pistons radiaux (5).

8. Dispositif d'entraînement de roue selon la revendication 1, **caractérisé** en ce qu'une conduite d'alimentation pour quelques cylindres (70) du moteur à pistons radiaux (5) peut être interrompue par l'intermédiaire d'une soupape d'inversion de cylindrée (64), et que la partie côté moteur peut être reliée à une conduite de retour.

9. Dispositif d'entraînement de roue selon la revendication 1, **caractérisé** en ce que le frein (7) comporte deux parties (16, 17) qui concourent par l'intermédiaire d'éléments à fermeture géométrique (46), une première partie (16) étant reliée de façon non rotative au capot (2) et une deuxième partie (17) à l'arbre de roue solaire (30).

10. Dispositif d'entraînement de roue selon la revendication 9, **caractérisé** en ce que la deuxième partie (17) du frein (7) est située sur un piston de frein (15) coaxial à un axe de rotation (6) du dispositif d'entraînement de roue et relie par fermeture géométrique, directement ou par l'intermédiaire du carter des cylindres (26) du moteur à pistons radiaux (5), la deuxième partie (17) et l'arbre de roue solaire (30).

11. Dispositif d'entraînement de roue selon la revendication 1, **caractérisé** en ce que le ressort (20) s'appuie sur le support du moyeu de roue (1) par l'intermédiaire d'un palier (28), pour l'installation du moteur à pistons radiaux (5).

12. Dispositif d'entraînement de roue selon la revendication 1, **caractérisé** en ce que le frein (7) est logé dans une chambre à pression (21) rendue étanche face à l'extérieur, de laquelle dépasse le piston de frein (15) par son extrémité soumise à l'effet de ressort, de sorte que le frein (7) s'ouvre dès que la chambre à pression (21) est alimentée en pression.
